# FASCICULE DE BREVET EUROPEEN

(11) **EP 0 524 854 B1**
(45) Date de publication et mention de la délivrance du brevet: **07.06.1995**
(21) Numéro de dépôt: 92401963.1
(22) Date de dépôt: 08.07.1992
(51) Int. Cl.: B65D 35/50

(54) **Valve réglable et distributeur équipé d'une telle valve**
Verstellbares Ventil und Spender mit einem solchen Ventil
Adjustable valve and dispenser with such a valve

(30) Priorité: 25.07.1991 FR 9109419
(43) Date de publication de la demande: 27.01.1993
(73) Titulaire: L'OREAL, 75008 Paris (FR)
(72) Inventeur: Gueret, Jean-Louis, F-75018 Paris (FR)
(74) Mandataire: Peuscet, Jacques

(56) Documents cités:
- FR-A- 931 126
- FR-A- 2 373 740
- FR-E- 70 076

## Description

L'invention concerne une valve d'ouverture unidirectionnelle laissant sortir ou non d'une enceinte un produit visqueux selon le préambule de la revendication 1.

On a déjà proposé, par exemple dans FR-A-2 373 740, une valve du type susmentionné comportant un élément faisant office de clapet constitué, d'une part, d'une partie rigide, fixée à l'enceinte par un moyen d'accrochage et, d'autre part, d'une partie élastique, maintenue par son élasticité en appui sur une zone d'étanchéité solidaire de l'enceinte.

Une telle valve est notamment utilisée pour empêcher toute rentrée d'air dans les tubes souples contenant des produits pâteux ou visqueux comme les pâtes dentifrices. On sait que les tubes de ce genre sont la plupart du temps constitués par un corps tubulaire de section généralement circulaire ou elliptique; une extrémité dudit corps tubulaire est fermée après remplissage du tube par aplatissement et soudure ; à l'autre extrémité est rapportée sur le corps tubulaire une tête, ou embout, constituant le goulot du récipient.

Lorsqu'une certaine quantité du produit est expulsée d'un tube élastique aplatissable, le tube, par suite de son élasticité, tend à reprendre sa forme initiale lorsque la pression d'expulsion cesse, et, ce faisant, tend à aspirer de l'air à la place du produit expulsé. Ceci constitue un inconvénient pour certains produits qui sont affectés de façon nuisible par la présence de l 'air avant qu'ils ne soient expulsés. La présence d'air, en particulier d'air finement divisé, dans certaines pâtes dentifrices peut provoquer la séparation de phases liquide et solide ou le dessèchement de la pâte. En outre, la présence d'air peut provoquer l'oxydation de certaines huiles donnant de la saveur, utilisées dans les pâtes dentifrices. Dans le cas de crèmes parfumées, la présence d'air peut provoquer l'oxydation de certains des composés constituant les parfums.

Une valve telle que décrite dans le document FR-A-2 373 740 précité n'a un fonctionnement convenable que dans la mesure où la pression exercée par la partie élastique est assez forte pour repousser le produit visqueux lorsque la pression d'expulsion cesse, ce qui revient à dire que chaque valve doit être adaptée à la viscosité du produit.

FR-A-931 126 décrit une valve selon le préambule de la revendication 1 comportant un clapet constitué d'un élément comprenant, d'une part, une partie rigide, fixée par un moyen d'accrochage à une enceinte contenant un produit visqueux et, d'autre part, une partie élastique à effort réglable ; mais ledit élément est en deux pièces, de réalisation coûteuse et peu pratique.

La présente invention a pour but d'obtenir une valve peu coûteuse utilisable pour n'importe quel produit quelle que soit sa viscosité.

La présente invention a pour objet une valve d'ouverture unidirectionnelle du genre ci-dessus, caractérisée par le fait que ladite valve est constituée d'un seul élément, la partie élastique dudit seul élément est maintenue par son élasticité en appui sur une zone d'étanchéité solidaire de l'enceinte, ladite valve comportant des moyens de réglage pour régler la force d'appui de ladite partie élastique sur ladite zone d'étanchéité, lesdits moyens de réglage constituant également ledit moyen d'accrochage.

Ainsi avec la mise en oeuvre d'un moyen économique, la même valve peut être utilisée pour des produits de différentes viscosités.

Dans un mode de réalisation préféré, le réglage de la force d'appui de la partie élastique du clapet sur la zone d'étanchéité s'effectue au moment de l'accrochage de sa partie rigide sur l'enceinte, en positionnant et en fixant ladite partie rigide plus ou moins loin par rapport au plan moyen de la zone d'étanchéité selon une direction sensiblement perpendiculaire audit plan moyen. Le réglage s'effectue donc le plus économiquement possible en procédant au montage avec la force nécessaire à l'enfoncement désiré.

Diverses formes de réalisation des moyens d'accrochage de la partie rigide sont possibles.

Avantageusement, les moyens de réglage et d'accrochage sont constitués par un dispositif à crans ; notamment le dispositif à crans est constitué de deux éléments complémentaires, l'un formant une crémaillère alors que l'autre comporte une dent unique coopérant avec la denture de la crémaillère.

Selon un mode de réalisation, la partie rigide du clapet constitue une cheminée à l'intérieur de laquelle fait saillie un bourrelet annulaire formant la dent unique de l'un des éléments du dispositif à crans, la crémaillère, qui constitue l'autre élément, étant ménagée sur la périphérie d'un doigt qui pénètre dans ladite cheminée et est solidaire de l'enceinte.

En variante, lesdits moyens de réglage et d'accrochage sont constitués par un organe mâle et un organe femelle coopérant par emboîtage à force, ledit emboîtage de l'organe mâle dans l'organe femelle s'effectuant plus ou moins profondément selon le réglage désiré.

On notera qu'après montage, par exemple au fur et à mesure de l'utilisation, on peut envisager de modifier le réglage en enfonçant plus ou moins le clapet pour augmenter la force d'appui en fonction de la viscosité du produit à distribuer.

Dans une autre forme de réalisation, le positionnement de la partie rigide s'effectue automatiquement en fonctionnement ; la partie rigide du clapet constitue une cheminée à l'intérieur de laquelle fait saillie un bourrelet annulaire, un doigt solidaire de l'enceinte pénétrant dans la cheminée et portant une tête adaptée à coopérer en butée avec ledit bourrelet annulaire.

Selon certaines variantes, la zone d'étanchéité est un anneau sensiblement plan entourant les moyens de réglage et d'accrochage, la partie élastique du clapet ayant la forme d'une membrane tronconique dont la grande base s'appuie sur ladite zone d'étanchéité.

Selon une forme de réalisation, la zone d'étanchéité est constituée par un plateau transversal dont est muni le goulot qui fait partie d'un support présentant une jupe cylindrique claquée sur l'extrémité d'une enveloppe rigide ; le support est fermé par une paroi couverte par une membrane souple présentant, d'une part, un bec en appui, à étanchéité, sur un siège porté par le support, et, d'autre part, une portion centrale en forme de dôme sphérique traversant une ouverture que présente, en son centre, un capot de maintien de la membrane solidarisé au support.

Il est possible également que la zone d'étanchéité soit un anneau ayant une ligne moyenne sensiblement plane, anneau à l'extérieur duquel se trouve les moyens de réglage et d'accrochage, la partie élastique du clapet ayant la forme d'une languette, dont les bords s'appuient sur la zone d'étanchéité.

Avantageusement, ledit élément partiellement élastique est constitué d'une seule pièce moulée en un matériau élastomère d'une dureté "Shore A" de 15 à 80, pour lequel il est connu qu'en fonction de ses formes et de son épaisseur, on peut faire varier sa rigidité et/ou élasticité.

La présente invention a également pour objet un distributeur de produit visqueux équipé d'une telle valve d'ouverture unidirectionnelle.

La présente invention sera mieux comprise avec la description de trois exemples de réalisation, purement illustratifs et non limitatifs, représentés sur les dessins annexés.

Sur ces dessins :
- la figure 1 représente en coupe axiale une enceinte souple de distribution équipée d'une valve selon une première variante de réalisation de l'invention ;
- les figures 2 et 3 représentent, respectivement en coupe et en vue de dessus, une valve selon une deuxième variante de réalisation de l'invention, le clapet étant retiré sur la figure 3 ;
- les figures 4 et 5 représentent, en coupe partielle, une poche souple de distribution équipée d'une valve selon une troisième variante de l'invention, la valve étant représentée, respectivement, dans deux positions de fonctionnement ;
- les figures 6 et 7 représentent, en perspective, et à échelles différentes, des pièces élémentaires mises en oeuvre dans la variante des figures 4 et 5.

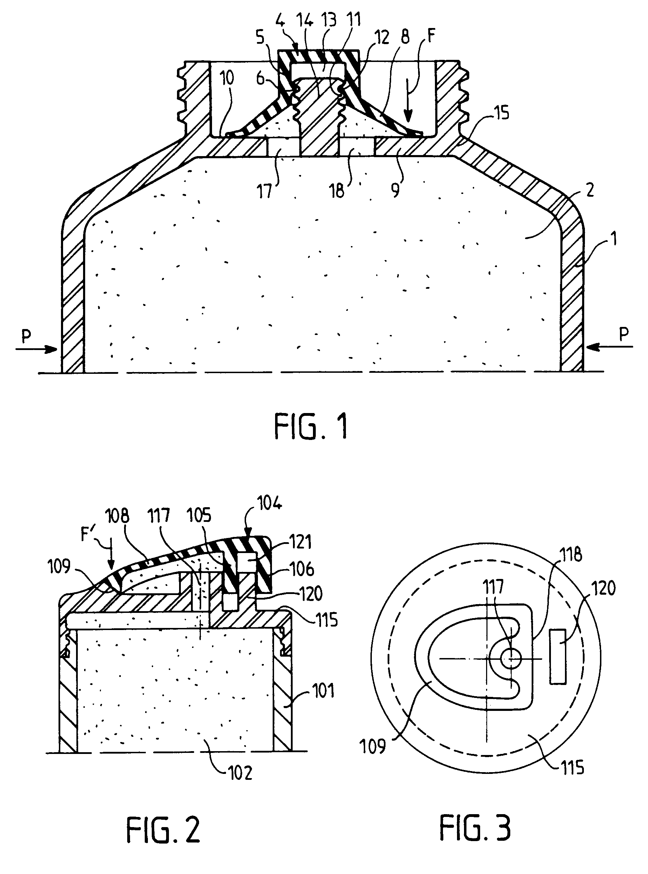

En se référant au dessin, on voit que la figure 1 montre, en coupe, un tube 1 rempli d'un produit visqueux 2 et muni d'un goulot 15 associé à un élément partiellement élastique désigné par 4 dans son ensemble, pour constituer une valve d'ouverture unidirectionnelle.

L'élément 4 constitue un clapet ; ce clapet comporte, d'une part, une partie rigide 5 et un moyen d'accrochage 6 pour s'accrocher sur le goulot 15, d'autre part, une partie élastique 8, ici en forme de membrane souple tronconique, qui prend appui avec une force F sur la zone d'étanchéité 9 du plateau 10 du goulot. La partie rigide 5 est un cylindre creux fermé à une extrémité et délimitant une cheminée 13 ; un bourrelet annulaire 12 est porté par la face interne du cylindre 5, du côté opposé à son extrémité fermée.

Le goulot 15 est muni d'un plateau 10 perpendiculaire à l'axe du tube, ledit plateau comportant des ouvertures 17, 18, en dimension et nombre suffisants pour laisser passer le produit 2 alors que la membrane 8 empêche la sortie du produit 2.

Lorsqu'une pression P est exercée sur les parois du flacon 1, dès que ladite pression appliquée au produit 2 est suffisante, celui-ci repousse élastiquement la membrane 8 pour sortir du tube le long de la zone d'étanchéité 9. Inversement, la membrane 8 fait office de valve anti-retour, dès que la pression est relachée.

Le moyen d'accrochage 6 est ici obtenu par un dispositif à crans constitué d'une crémaillère 11 coopérant avec une dent unique. La crémaillère 11 est ménagée sur la périphérie d'un doigt 14 solidaire du plateau du goulot 15 et disposé à l'intérieur de la cheminée 13. La dent unique est formée par le bourrelet annulaire 12, qui fait saillie à l'intérieur de la cheminée 13.

Le clapet 4 se monte sensiblement perpendiculairement au plateau 10 et le réglage de la force d'appui F s'effectue en positionnant et en fixant ladite partie rigide 5 plus ou moins loin par rapport au plateau 10. Il est clair que plus le clapet 4 est enfoncé, plus la force F est importante et plus la pression P nécessaire à la sortie du produit 2 est grande. Ainsi le même élément 4 est utilisable quelle que soit la viscosité du produit, puisque, maintenant, la force nécessaire au fonctionnement de la valve est réglable lors du montage en enfonçant plus ou moins profondément l'élément partiellement élastique 4.

Dans cet exemple de réalisation, la valve est symétrique autour de l'axe du tube 1, et la zone d'étanchéité 9 a une forme annulaire en vis-à-vis de l'extrémité souple de la membrane 8.

Les figures 2 et 3 montrent, au contraire, un exemple de réalisation dissymétrique d'une valve excentrée.

Un élément partiellement élastique désigné par 104 dans son ensemble forme un clapet ; ce clapet comporte une partie dure 105 emboîtable plus ou moins profondément sur une saillie parallélépipédique 120 de forme appropriée aménagée sur un embout formant le goulot 115 d'un tube 101.

Une partie souple en forme de languette 108 de l'élément 104 vient prendre appui avec une force F′ sur une zone d'étanchéité 109. Au moins une ouverture 117 est aménagée dans le goulot 115, de sorte que, similairement à la figure 1, la languette 108 fasse office de clapet anti-retour pour le produit visqueux 102.

Les moyens de réglage et d'accrochage sont ici constitués d'une partie mâle formée par la saillie 120 portée par le goulot 115 et d'une partie femelle 121 aménagée dans la partie dure 105 du clapet 104 ; l'inverse est aussi évidemment possible.

Les parties mâle et femelle, qui constituent ensemble le moyen d'accrochage 106, sont emmanchées à force l'une dans l'autre ; elles sont situées à l'extérieur de la zone d'étanchéité 109, laquelle est bien visualisée sur la figure 3 du fait que le clapet 104 n'y est pas représenté. L'emmanchement du clapet 104 s'effectue au montage dans une direction sensiblement parallèle à l'axe de l'ouverture 117, en l'enfonçant plus ou moins loin par rapport au plan moyen de la zone d'étanchéité 109, selon une direction sensiblement perpendiculaire audit plan moyen. L'élément mâle 120 est, vu en plan, de forme rectangulaire ; la partie du clapet 104, qui vient s'insérer à force entre la saillie 120 et la paroi en vis-à-vis 118 qui délimite partiellement, l'ouverture 117 du goulot, est suffisamment contrainte pour concourir à l'étanchéité de la valve.

Il est clair que, dans cette deuxième variante de réalisation de l'invention, et comme pour la première variante, la valve est aussi de force réglable en fonction du plus ou moins grand enfoncement du système d'emmanchement à force.

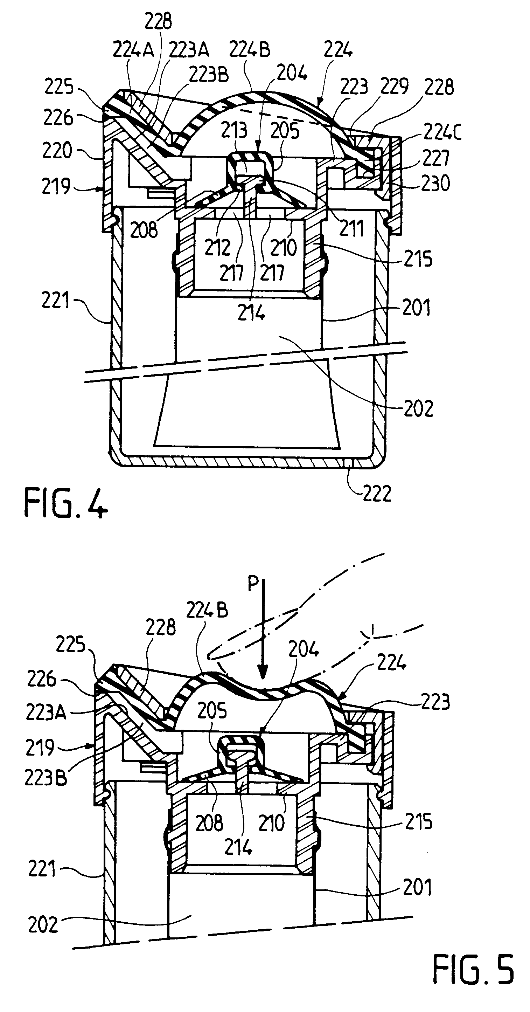

Les figures 4 à 7 montrent un autre exemple de réalisation de valve d'ouverture unidirectionnelle selon la présente invention.

Selon la figure 4, une enceinte constituée d'une poche souple 201, remplie d'un produit 202, est emmanchée sur un goulot 215 de section circulaire auquel elle est solidarisée à étanchéité, par exemple par collage, le goulot 215 faisant partie d'un support 219 présentant une jupe cylindrique 220, de section circulaire, claquée sur l'extrémité d'une enveloppe rigide 221, à section également circulaire ; une entrée d'air 222 est prévue dans le fond de l'enveloppe 221.

Entre la jupe 220 et le goulot 215, le support 219 est fermé à sa partie supérieure par une paroi 223 dont une partie 223A est inclinée, par rapport à l'axe de l'enveloppe 221 et du goulot 215, depuis sa jonction avec la jupe 220 et vers le goulot 215, et s'étend sur une faible largeur, perpendiculairement au plan de la figure 4, en étant bordée par des flancs 223B, dont le bord est parallèle à la partie 223A.

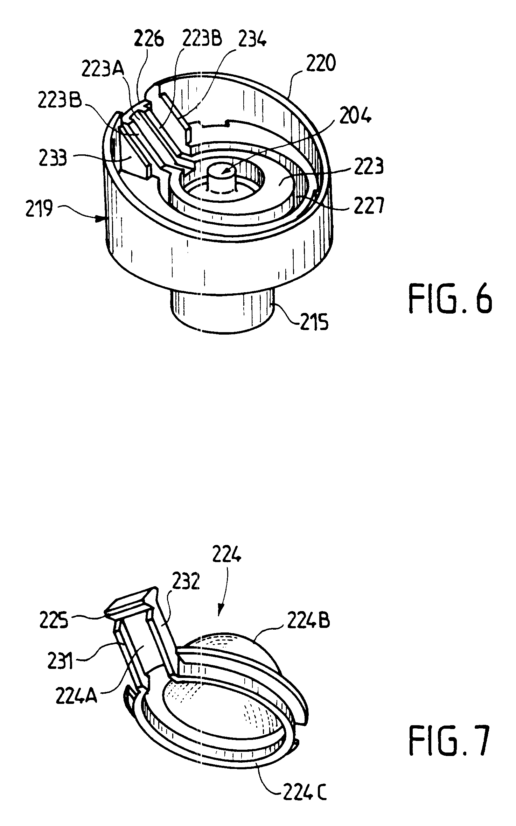

Une membrane souple 224 recouvre la paroi 223 du support 219 ; la membrane 224 présente, au droit de la partie 223A et des flancs 223B de la paroi 223, une portion 224A, de forme complémentaire à celle de la partie 223A et des flancs 223B, qui se termine par un bec 225 en appui, à étanchéité, sur un siège 226 constitué par la bordure d'extrémité du canal formé par la partie 223A et les flancs 223B. Ledit canal est recouvert par la portion 224A de la membrane 224 qui présente, par ailleurs, une portion centrale en forme de dôme sphérique 224B et un talon 224C d'ancrage de forme semi-circulaire, dans le prolongement des ailes 231 et 232 qui bordent la portion 224A chevauchant les flancs 223B de la paroi 223 et qui sont visibles sur la figure 7 qui représente la membrane 224, seule, en perspective. Le talon 224C et les ailes 231 et 232 prennent place dans une rainure 227 ménagée dans la paroi 223 mieux visible sur la figure 6, qui représente, en perspective, le support 219 sur lequel n'est monté que l'élément 204. Parallèlement aux flancs 223B, des parois axiales 233 et 234 flanquent les ailes 231 et 232 de la membrane 224, lorsque celle-ci est montée dans le support 219. Un capot 228, en matière plastique, est muni en son centre d'une ouverture 229 pour le passage du dôme 224B et recouvre le reste de la membrane 224, en maintenant appliqués la portion 224A et le bec 225, d'une part, et le talon 224C, d'autre part, sur la paroi 223 ; le capot 228 est solidarisé à la paroi 223 par des doigts de clipsage 230 qui traversent des trous ménagés, à cet effet, dans la paroi 223.

Le goulot 215 est associé à un élément partiellement élastique, désigné dans son ensemble par le repère 204, pour constituer une valve d'ouverture unidirectionnelle.

L'élément 204 comporte, d'une part, une partie rigide 205, et, d'autre part, une partie élastique 208, en forme de membrane souple tronconique. Le goulot 215 est muni d'un plateau 210 transversal qui comporte des ouvertures 217 en dimension et nombre suffisants pour laisser passer le produit 202 ; le canal formé par la partie 223A et les flancs 223B débouche dans le goulot 215, au dessus dudit plateau 210.

La partie rigide 205 de l'élément 204 est un cylindre creux fermé à une extrémité et délimitant une cheminée 213 ; un bourrelet annulaire 212 est porté par la face interne de la cheminée 213, du côté opposé à son extrémité fermée. Un doigt 214 est solidaire du plateau 210 du goulot 215, la cheminée 213 coiffant le doigt 214 qui porte une tête circulaire 211 qui retient l'élément 204 par coopération avec le bourrelet annulaire 212 ; dans la position de repos représentée à la figure 4, la partie élastique 208 de l'élément 204 est en appui sur la zone d'étanchéité du plateau 210 définie autour des ouvertures 217, le bourrelet annulaire 212 étant appliqué contre la tête 211 ; ainsi, dans cette position, une force d'appui initiale de la partie élastique 208 sur la zone d'étanchéité est assurée au repos ; la valeur de cette force d'appui dépend, ensuite, de la position relative de la partie rigide 205 et de la tête 211 ; plus la tête 211 pénètre dans la cheminée 213, plus la force d'appui est grande ; la figure 5 montre une telle position relative différente de celle, correspondant au repos, représentée figure 4 : on voit, sur la figure 5, que l'étanchéité est réalisée par la partie élastique selon un diamètre plus grand que celui correspondant à la figure 4.

Ceci est mis à profit, selon l'invention, pour une utilisation d'une telle même valve d'ouverture unidirectionnelle appliquée à des produits de viscosités différentes.

Le fonctionnement est le suivant : au repos, après utilisation, le produit 202 remplit, d'une part, le volume du goulot 215 sous l'élément 204, et la poche souple 201, et, d'autre part, le volume limité, au dessus de l'élément 204, par la paroi 223 et la membrane 224. Lorsqu'une pression P est exercée sur le dôme 224B de la membrane 224, comme illustré sur la figure 5, la pression dans le volume situé au dessus de l'élément 204 croît ; sous l'effet de cette pression, la partie rigide 205 de l'élément 204 descend le long du doigt 214 et la membrane souple 208 s'étale sur le plateau 210, rendant ainsi l'étanchéité plus parfaite ; lorsque la pression dans ledit volume atteint une valeur suffisante, elle soulève le bec 225 de son siège 226 et le produit peut s'échapper vers l'extérieur. Lorsque l'on cesse d'exercer la pression sur le dôme 224B, le bec 225 revient reposer sur son siège 226, isolant le produit de l'extérieur : lors du mouvement de retour du dôme 224B vers sa position de repos, dans un premier temps, la partie rigide 205 remonte le long du doigt 214 jusqu'à la venue en butée du bourrelet 212 sur la tête 211, la membrane souple 208 reprenant son contact de plus faible diamètre avec le plateau 210 puis se soulevant pour laisser passer du produit 202 depuis la poche 201 vers le volume au dessus de l'élément 204, et ce jusqu'à ce que le dôme 224B reprendre, par élasticité, sa position de repos ; la poche 201 suit ce transfert de produit 202 sans contrainte, du fait de l'entrée d'air 222 prévue dans le fond de l'enveloppe 221.

Comme on vient de le voir, lorsqu'une pression est exercée sur le dôme 224B, l'étanchéité de la membrane 208 est augmentée : ceci est favorable lorsque le produit est peu visqueux, les risques de fuite étant fortement diminués ; au relâchement de la pression sur le dôme, la résistance au passage du produit, depuis la poche 201 vers le volume situé au dessus de l'élément 204, est diminuée : ceci est favorable lorsque le produit est très visqueux. Ainsi, grâce à l'invention, un même élément 204 permet un bon fonctionnement de la valve, quelle que soit la viscosité du produit.

## Revendications

1. Valve d'ouverture unidirectionnelle comportant un clapet (4, 104, 204) constitué d'un élément comprenant, d'une part, une partie rigide (5, 105, 205), fixée par un moyen d'accrochage (6, 106, 212) à une enceinte (1, 101, 201) contenant un produit visqueux (2, 102, 202) et, d'autre part, une partie élastique (8, 108, 208), caractérisée par le fait que ledit clapet est constituée d'un seul élément, la partie élastique (8, 108, 208) dudit seul élément est maintenue par son élasticité en appui sur une zone d'étanchéité (9, 109, 210) solidaire de l'enceinte, ladite valve comportant des moyens de réglage (11, 12 ; 120, 121 ; 214, 213) pour régler la force d'appui de ladite partie élastique sur ladite zone d'étanchéité, lesdits moyens de réglage constituant également ledit moyen d'accrochage.

2. Valve selon la revendication 1, caractérisée par le fait que le réglage de la force d'appui de la partie élastique (8, 108, 208) du clapet (4, 104, 204) sur la zone d'étanchéité (9, 109, 210) s'effectue par le positionnement de ladite partie rigide (5, 105, 205) plus ou moins loin par rapport au plan moyen de la zone d'étanchéité (9, 109, 210) selon une direction sensiblement perpendiculaire audit plan moyen.

3. Valve selon la revendication 2, caractérisée par le fait que le positionnement de la partie rigide (5, 105) s'effectue en fixant ladite partie rigide (5, 105) au moment de son accrochage sur l'enceinte.

4. Valve selon la revendication 3 caractérisée par le fait que lesdits moyens de réglage et d'accrochage sont constitués par un dispositif à crans (11, 12).

5. Valve selon la revendication 4, caractérisée par le fait que le dispositif à crans est constitué de deux éléments complémentaires, l'un formant une crémaillère (11) alors que l'autre comporte une dent unique (12) coopérant avec la denture de la crémaillère.

6. Valve selon la revendication 5, caractérisée par le fait que la partie rigide du clapet constitue une cheminée (13) à l'intérieur de laquelle fait saillie un bourrelet annulaire (12) formant la dent unique de l'un des éléments du dispositif à crans, la crémaillère (11), qui constitue l'autre élément, étant ménagée sur la périphérie d'un doigt (14) qui pénètre dans ladite cheminée et est solidaire de l'enceinte (1).

7. Valve selon la revendication 2, caractérisée par le fait que le positionnement de la partie rigide (205) s'effectue automatiquement en fonctionnement.

8. Valve selon la revendication 7, caractérisée par le fait que la partie rigide du clapet constitue une cheminée (213) à l'intérieur de laquelle fait saillie un bourrelet annulaire (212), un doigt (214) solidaire de l'enceinte (201) pénétrant dans la cheminée (213) et portant une tête (211) adaptée à coopérer en butée avec ledit bourrelet annulaire (212).

9. Valve selon la revendication 3, caractérisée par le fait que les moyens de réglage et d'accrochage sont constitués par un organe mâle (120) et un organe femelle (121) coopérant par emboîtage à force, ledit emboîtage de l'organe mâle dans l'organe femelle s'effectuant plus ou moins profondément selon le réglage désiré.

10. Valve selon l'une des revendications 1 à 9, caractérisée par le fait que la zone d'étanchéité (9, 210) est un anneau sensiblement plan entourant les moyens de réglage et d'accrochage, la partie élastique (8, 208) du clapet (4, 204) ayant la forme d'une membrane tronconique dont la grande base s'appuie sur ladite zone d'étanchéité (9, 210).

11. Valve selon l'une des revendications 1 à 9, caractérisée par le fait que la zone d'étanchéité (109) est un anneau ayant une ligne moyenne sensiblement plane, anneau à l'extérieur duquel se trouvent les moyens (120, 121) de réglage et d'accrochage, la partie élastique du clapet ayant la forme d'une languette (108), dont les bords s'appuient sur la zone d'étanchéité (109).

12. Valve selon l'une des revendications 1 à 11, caractérisée par le fait que l'élément constituant le clapet (4, 104, 204) est constitué d'une seule pièce moulée en un matériau élastomère d'une dureté "Shore A" de 15 à 80.

13. Valve selon la revendication 8, caractérisée par le fait que la zone d'étanchéité (210) est constituée par un plateau (210) transversal dont est muni le goulot (215) qui fait partie d'un support (219) présentant une jupe cylindrique (220) claquée sur l'extrémité d'une enveloppe rigide (221)

14. Valve selon la revendication 13, caractérisée par le fait que le support (219) est fermé par une paroi (223) couverte par une membrane souple (224) présentant, d'une part, un bec (225) en appui, à étanchéité, sur un siège (226) porté par le support (219), et, d'autre part, une portion centrale en forme de dôme sphérique (224B) traversant une ouverture (229) que présente, en son centre, un capot (228) de maintien de la membrane (224) solidarisé au support (219).

15. Distributeur de produit caractérisé par le fait qu'il est équipé d'une valve d'ouverture unidirectionnelle selon l'une des revendications 1 à 14.

## Claims

1. A one-way opening valve, comprising a check valve (4, 104, 204) constituted by an element comprising, on the one hand, a rigid part (5, 105, 205) fixed by a fastening means (6, 106, 212) to a shell (1, 101, 201) containing a viscous product (2, 102, 202) and, on the other hand, an elastic part (8, 108, 208), characterized in that the said check valve is formed by a single element, the elastic part (8, 108, 208) of the said single element is held by its elasticity to bear on a sealing zone (9, 109, 210) joined to the shell, the said valve comprising adjustment means (11, 12; 120, 121; 214, 213) for adjusting the bearing force of the said elastic part on the said sealing zone, the said adjustment means also constituting the said fastening means.

2. A valve according to claim 1, characterized in that the adjustment of the bearing force of the elastic part (8, 108, 208) of the check valve (4, 104, 204) on the sealing zone (9, 109, 210) is effected by positioning the said rigid part (5, 105, 205) at a greater or lesser distance from the median plane of the sealing zone (9, 109, 210) along a direction substantially perpendicular to the said median plane.

3. A valve according to claim 2, characterized in that the positioning of the rigid part (5, 105) is effected by fixing the said rigid part (5, 105) at the time when it is fastened on the shell.

4. A valve according to claim 3, characterized in that the said adjustment and fastening means are constituted by a device with notches (11, 12).

5. A valve according to claim 4, characterized in that the device with notches is constituted by two complementary elements, one forming a rack (11), whilst the other has a single tooth (12) cooperating with the tooth system of the rack.

6. A valve according to claim 5, characterized in that the rigid part constitutes a duct (13) inside which there projects an annular bead (12) forming the single tooth of one of the elements of the device with notches, the rack (11) which constitutes the other element being arranged on the circumference of a finger (14) which penetrates into the said duct and is joined to the shell (1).

7. A valve according to claim 2, characterized in that the positioning of the rigid part (205) is effected automatically in operation.

8. A valve according to claim 7, characterized in that the rigid part of the check valve constitutes a duct (213), inside which there projects an annular bead (212), a finger (214) joined to the shell (201) penetrating into the duct (213) and carrying a head (211) adapted to cooperate with the said annular bead (212) by way of abutment.

9. A valve according to claim 3, characterized in that the adjustment and fastening means are constituted by a male element (120) and a female element (121) cooperating by way of a force fit, the said fit of the male element in the female element being effected at a greater or lesser depth according to the setting desired.

10. A valve according to one of claims 1 to 9, characterized in that the sealing zone (9, 210) is a substantially flat ring surrounding the adjustment and fastening means, the elastic part (8, 208) of the check valve (4, 204) having the shape of a frustoconical membrane whose large base bears on the said sealing zone (9, 210).

11. A valve according to one of claims 1 to 9, characterized in that the sealing zone (109) is a ring having a substantially planar median line, within which ring the adjustment and fastening means (120, 121) are located, the elastic part of the check valve having the shape of a tongue (108) whose edges bear on the sealing zone (109).

12. A valve according to one of claims 1 to 11, characterized in that the element constituting the check valve (4, 104, 204) is formed by a single part moulded from an elastomeric material with a Shore A hardness of 15 to 80.

13. A valve according to claim 8, characterized in that the sealing zone (210) is constituted by a transverse plate (210) wherewith the neck (215) is equipped, which forms part of a support (219) having a cylindrical skirt (220) catch-engaged on the end of a rigid shell 221).

14. A valve according to claim 13, characterized in that the support (219) is closed by a wall (223) covered by a flexible membrane (224) having, on the one hand, a projection (225) bearing in a leakproof manner on a seat (226) carried by the support (219) and on the other hand, a central portion in the shape of a spherical dome (224B) passing through a central opening (229) of a cap (228) for keeping the membrane (224) joined to the support (219).

15. A product characterized in that it is provided with a one-way opening valve according to one of claims 1 to 14.

## Patentansprüche

1. Auslaßventil, das in eine Richtung wirkt und eine Rückschlagklappe (4,104,204) umfaßt, die aus einem Element besteht, das einerseits ein starres Teil (5,105,205), das mit Einhakmitteln (6,106,212) an einem ein viskoses Erzeugnis (2,102,202) enthaltenden Behälter (1,101,201) befestigt ist und andererseits ein elastisches Teil (8,108,208) aufweist,
dadurch gekennzeichnet, daß
die Rückschlagklappe aus einem einzigen Element besteht, wobei der elastische Teil (8,108,208) dieses einzigen Elementes durch seine Elastizität gegen eine mit der Einfassung verbundene Dichtungszone (9,109,210) in Anlage gehalten wird, wobei das Ventil Einstellmittel (11,12;120,121;214,213) zur Einstellung der Auflagekraft des elastischen Teils auf der Dichtungszone aufweist, wobei die Einstellmittel gleichzeitig die Einhakmittel bilden.

2. Ventil gemäß Anspruch 1, dadurch gekennzeichnet, daß die Einstellung der Auflagekraft des elastischen Teils (8,108,208) der Rückschlagklappe (4,104,204) auf der Dichtungszone (9,109,210) durch die mehr oder weniger weit von der Mittelebene der Dichtungszone (9,109,210) entfernte Positionierung des starren Teils (5,105,205) entlang einer zu dieser Mittelebene im wesentlichen senkrechten Richtung stattfindet.

3. Ventil gemäß Anspruch 2, dadurch gekennzeichnet, daß die Positionierung des starren Teils (5,105) durch Befestigung des starren Teils (5,105) beim Einhaken auf dem Behälter stattfindet.

4. Ventil gemäß Anspruch 3, dadurch gekennzeichnet, daß die Einstell- und Einhakmittel aus einer Rastvorrichtung (11,12) bestehen.

5. Ventil gemäß Anspruch 4, dadurch gekennzeichnet, daß die Rastvorrichtung aus zwei komplementären Bauelementen besteht, wobei eines eine Zahnstange (11) darstellt, während das andere einen einzelnen Zahn (12) aufweist, der mit der Zahnung der Zahnstange zusammenwirkt.

6. Ventil gemäß Anspruch 5, dadurch gekennzeichnet, daß der starre Teil der Rückschlagklappe einen Schacht (13) bildet, in dessen Inneres eine ringförmige Wulst (12) vorspringt, die den einzelnen Zahn des einen Elementes der Rastvorrichtung bildet, wobei die das andere Element bildende Zahnstange (11) in den Umfang eines Zapfens (14) eingebracht ist, der in den Schacht eindringt, und mit dem Behälter (1) verbunden ist.

7. Ventil gemäß Anspruch 2, dadurch gekennzeichnet, daß die Positionierung des starren Teils (205) automatisch im Betrieb stattfindet.

8. Ventil gemäß Anspruch 7, dadurch gekennzeichnet, daß der starre Teil der Rückschlagklappe einen Schacht (213) bildet, in dessen Inneres eine ringförmige Wulst (212) vorspringt, wobei ein mit der Einfassung (201) verbundener Zapfen (214) in den Schacht (213) eindringt und einen Kopf (211) trägt, der für ein Zusammenwirken auf Anschlag mit der ringförmigen Wulst (212) angepaßt ist.

9. Ventil gemäß Anspruch 3, dadurch gekennzeichnet, daß die Einstell- und Einhakmittel aus einem vorstehender Bauteil (120) und einem aufnehmenden Bauteil (121) bestehen, die durch Ineinanderpressen zusammenwirken, wobei entsprechend der gewünschten Einstellung das Einfügen des vorstehenden Bauteils in das aufnehmende Bauteil mehr oder weniger tief erfolgt.

10. Ventil gemäß einem der Ansprüche 1 bis 9, dadurch gekennzeichnet, daß die Dichtungszone (9,210) ein im wesentlichen ebener Ring ist, der die Einstell- und Einhakmittel umgibt, wobei der elastische Teil (8,208) der Rückschlagklappe (4,204) die Form einer kegelstumpfartigen Membran aufweist, die entlang ihrer Grundlinie auf der Dichtungszone (9,210) in Anlage kommt.

11. Ventil gemäß einem der Ansprüche 1 bis 9, dadurch gekennzeichnet, daß die Dichtungszone (109) ein Ring mit im wesentlichen ebener Mittellinie ist, wobei sich außerhalb des Rings Einstell- und Einhakmittel (120,121) befinden, wobei der elastische Teil der Rückschlagklappe die Form einer Zunge (108) aufweist, deren Ränder auf der Dichtungszone (109) aufliegen.

12. Ventil gemäß einem der Ansprüche 1 bis 11, dadurch gekennzeichnet, daß das die Rückschlagklappe (4,104,204) bildende Bauteil aus einem einzigen Teil besteht, das aus einem elastomeren Material mit einer "Shore A"-Härte von 15 bis 80 geformt ist.

13. Ventil gemäß Anspruch 8, dadurch gekennzeichnet, daß die Dichtungszone (210) aus einer Querplatte (210) besteht, mit welcher der Hals (215) ausgestattet ist, der den Teil eines Trägers (219) bildet, welcher einen zylindrichen Mantel (220) aufweist, der auf das Ende einer starren Hülle (221) aufgesetzt ist.

14. Ventil gemäß Anspruch 13, dadurch gekennzeichnet, daß der Träger (219) durch eine Wand (223) verschlossen ist, die von einer nachgiebigen Membran (224) bedeckt ist, die einerseits einen Schnabel (225), der dicht auf einem von dem Träger (219) getragenen Sitz (226) aufliegt, und andererseits einen zentralen Abschnitt in Form einer kugelförmigen Kuppel (224B) aufweist, der eine Öffnung (229) überspannt, die im Zentrum einer der Befestigung der Membran (224) dienenden Kappe (228) vorgesehen ist, die mit dem Träger (219) verbunden ist.

15. Produktspender, dadurch gekennzeichnet, daß er mit einem in eine Richtung wirkenden Auslaßventil gemäß einem der Ansprüche 1 bis 14 ausgestattet ist.
